# EUROPEAN PATENT APPLICATION

(11) **EP 1 810 760 A2**
(43) Date of publication of application: **25.07.2007**
(21) Application number: 07001078.0
(22) Date of filing: 18.01.2007
(51) Int. Cl.: B09B 3/00

(54) **Support method and system for treatment of products, and information processing apparatus**

(30) Priority: 20.01.2006 JP 2006011836; 01.12.2006 JP 2006325129
(71) Applicant: Hitachi, Ltd., Tokyo 100-8280 (JP)
(72) Inventor: Ikuzawa, Masanori, Chiyoda-ku, Tokyo 100-8220 (JP); Ichikawa, Yoshiaki, Chiyoda-ku, Tokyo 100-8220 (JP); Yamamoto, Noriaki, Chiyoda-ku, Tokyo 100-8220 (JP)
(74) Representative: Strehl Schübel-Hopf & Partner

(57) **Abstract**

The information processing apparatus (2000), according to a processing/control program, performs a treatment for identifying the product corresponding to the data capable of identifying products on the basis of the received data capable of identifying products and the plural product data stored in the memory means (31), and a treatment for generating instruction data on the treatment of the identified product or its constituent parts and outputting the instruction data to the primary and secondary recyclers, respectively, by using the part structure data and the part attribution data of the identified product, data of parts to be separated and subjected to a proper treatment, and data representing the part to be shipped from a primary recycler to a secondary recycler and the name of the secondary recycler, all the data being stored in the memory means (31).

## Description

### BACKGROUND OF THE INVENTION

Directive on waste electric and electronic equipment (WEEE Directive), which has been in effect in Europe since August of 2005, aims to establish a system for retrieving and treating waste electric and electronic appliances properly. The WEEE Directive stipulates that every recycler must perform a proper treatment of waste electric and electronic appliances by separating from the waste electric and electronic appliances such predetermined parts as containing mercury, that a producer must provide a recycler with such information as the names of the chemical substances contained in the waste electric and electronic appliances and the sorts of parts to be separated from the waste appliances, and that a predetermined recycle rate must be attained. In addition to this regulation in Europe, a global movement toward the establishment of a similar worldwide regulation has been initiated.

At present, however, recyclers very often encounter such a problem in performing a recycling process or a so-called proper treatment for disposal of retrieved waste electric and electronic appliances, that they cannot think of how the waste appliances should be properly treated since they have no way of knowing the materials which the waste appliances are made of, and the names of the chemical compounds or poisonous substances the wastes contain. In general, the way of disassembling a product and the names of the constituent materials of the product are hardly indicated on or packed with the product. Producers hardly have a system for providing such information, either. Accordingly, most of retrieved waste products are subjected to such treatments as disassembling and crushing processes that individual recyclers have invented depending on their experience and instinct. As a result of this, materials such as iron, part of non-ferrous materials and glass are retrieved, but the remaining natural resources are finally disposed of.

To solve such problems as described above, the Japanese Patent document, JP-A-2000-312874, discloses a method and an apparatus for supporting the treatment of retrieved products. Also, the Japanese Patent document, JP-A-2001-67404, discloses a system for supporting the proper and efficient disassembly of used products wherein there is provided information reflecting operational strategies characteristic of individual recyclers and the technical levels of the individual recyclers.

Until a used piece of equipment has been disassembled and subjected to a recycling process or a proper treatment, a plurality of recyclers, e.g. a primary recycler, a secondary recycler, ......, etc., will generally be involved. In this circumstance, the technical levels and specialties of those recyclers vary. Further, each recycler is responsible for what product or part it should receive, and the extent to which the received product or part should be disassembled or treated before the disassembled product or part is delivered to the next recycler. However, those prior art documents have not taken it into consideration that the used piece of equipment, which has been retrieved, is very often to be processed by a plurality of recyclers.

### SUMMARY OF THE INVENTION

This invention aims to provide a method and a system for supporting the treatment of products and an information processing apparatus wherein it is possible to provide information on the treatments of products which suit for individual recyclers, respectively.

The system for supporting the treatment of products, to which this invention is applied, is of constitution wherein an information processing apparatus is connected with the terminals of plural recyclers via a network. The information processing apparatus performs the treatments described below in accordance with the treatment and control programs stored in the storage device incorporated in the information processing apparatus.

Namely, when the information processing apparatus receives via a network such data capable of specifying particular products as model numbers, model types and model years, from any of the plural terminals of recyclers, the information processing apparatus performs the treatment for identifying the product corresponding to the received data on the basis of the received data and the plural product data stored in the memory device; and performs the treatment for generating and outputting the instruction data related to the treatment of the identified product or its constituent parts the disassembling method of which the first and second recyclers can independently and separately perform, by using such data stored in the storage device as the part structure data and the part attribution data of the identified product, the data of parts to be separated and subjected to a proper treatment, and the data indicative of the parts to be shipped from the first recycler to the second recycler and of the second recycler.

Further, the storage device stores therein data covering the chemical substances regulated under the applicable law. In the above mentioned process where the information processing apparatus generates the instruction data, it is determined on the basis of the part attribution data and the data covering the chemical substances, whether the identified product or the constituent parts thereof contain the chemical substances regulated under the applicable law. If they contain such chemical substances, the determined result is reflected in the instruction data.

The instruction data include the disassembly evaluation field in which the first and second recyclers input their evaluations of disassembling operations. The storage device stores therein the thus generated instruction data and the data related to the evaluations of the disassembling operations inputted into the disassembly evaluation field by the first or second recycler.

According to this invention having such a constitution as described above, there is realized a method and a system for supporting the treatment of products wherein it is possible to provide information on the treatments of products which suit for different recyclers, and an information processing apparatus associated with the method and apparatus.

Other objects, features and advantages of the invention will become apparent from the following description of the embodiments of the invention taken in conjunction with the accompanying drawings.

### BRIEF DESCRIPTION OF THE DRAWINGS

Fig. 1 is a diagram showing the flows of a product and information, initiating from the coming-into-existence of a product and terminating in the disposal treatment of the product;
Fig. 2 schematically shows a method and a system for supporting the disassembling method of products and an information processing apparatus associated with the method and the apparatus;
Fig. 3 schematically shows the structure of an information processing apparatus 20 for practicing the method for supporting the disassembling method of products;
Fig. 4 shows the data structure of a product database 301;
Fig. 5 shows the data structure of a part structure database 302;
Fig. 6 shows the data structure of a part attribution database 303;
Fig. 7 shows the data structure of a database 304 of conditions for parts to be separated;
Fig. 8 shows the data structure of a treatable part database 305;
Fig. 9 shows the data structure of a regulation database 306;
Fig. 10 shows the data structure of a part image database 307;
Fig. 11 is a flow chart of the treatment of product taking place in the system for supporting the disassembling method of products 200 shown in Fig. 2;
Fig. 12 is a flow chart of the detail of the treatment performed by a section 311 for identifying part to be separated;
Fig. 13 is a flow chart of the detail of the treatment performed by a recycler selecting section 312;
Fig. 14 is also a flow chart of the detail of the treatment performed by the recycler selecting section 312;
Fig. 15 is a flow chart of the detail of the treatment performed by a disassembly instruction generating section 313;
Fig. 16 is also a flow chart of the detail of the treatment performed by the disassembly instruction generating section 313;
Fig. 17 shows an example of the input image for terminal 22 of a primary recycler;
Fig. 18 shows an example of the output image displayed on the screen of the terminal 22 of the primary recycler;
Fig. 19 shows an example of the output image displayed on the screen of the terminal 23 of a secondary recycler;
Fig. 20 illustrates the flow of the treatment shown in Fig. 11;
Fig. 21 further illustrates the flow of the treatment shown in Fig. 11;
Fig. 22 still further illustrates the flow of the treatment shown in Fig. 11;
Fig. 23 yet further illustrates the flow of the treatment shown in Fig. 11;
Fig. 24 schematically shows a method and a system for supporting the disassembling method of products and an information processing apparatus associated with the method and the apparatus, as another embodiment of this invention;
Fig. 25 shows the data structure of a disassembly instruction database 308;
Fig. 26 shows the data structure of a recycler database 309;
Fig. 27 shows an example of a product search image for a producer;
Fig. 28 shows the result of product search;
Fig. 29 shows another example of a product search image for a producer;
Fig. 30 shows an example of a product search image for a producer, in another mode of practice of this invention; and
Fig. 31 shows an example of a product search image for a recycler, in another mode of practice of this invention.

### DESCRIPTION OF THE EMBODIMENTS

An embodiment of this invention will now be described in detail in the following with reference to the attached drawings.

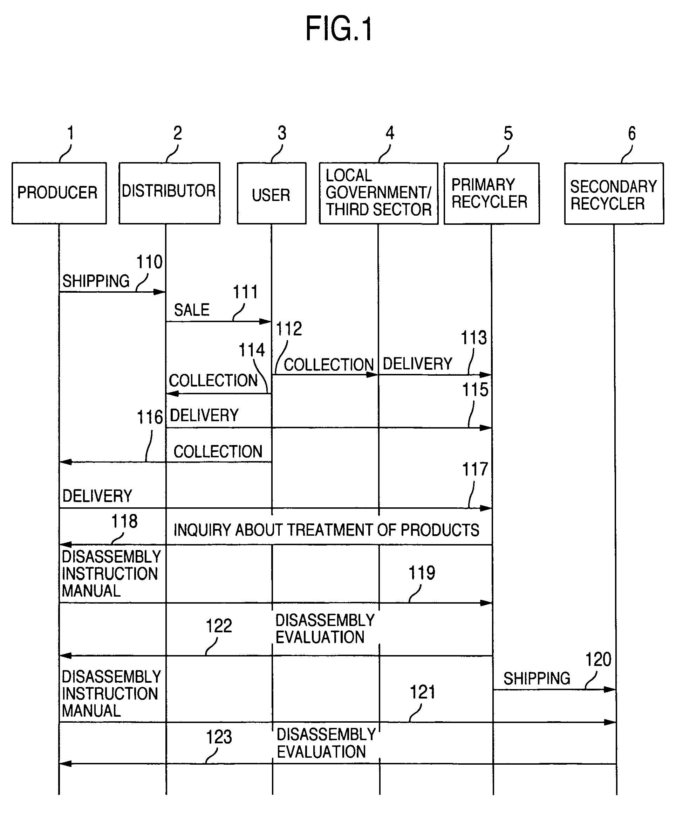

Fig. 1 is a diagram showing the flows of a product and information, initiating from the generation of a product and terminating in the disposal treatment of the product. As shown in Fig. 1, a product is manufactured in a factory of a producer 1 and then shipped to a distributor 2 (shipping 110). The distributor 2 sells the product to a user 3 (selling 111). Occasionally, the product may be delivered from the producer 1 directly to the user 3. The user 3 uses the purchased product for a certain period of time and disposes of it at last. The discarded product follows one of three routes: it is first retrieved from the user 3 by a judicial person (third sector) 4 established through joint financing by a private company And a local government, national government or autonomous body and then delivered to a recycler (hereafter referred to as primary recycler) 5 (collection 112 and delivery 113); it is first retrieved from the user 3 by the distributor 2 and then delivered to the primary recycler 5 (collection 114 and delivery 115); and it is first retrieved from the user 3 by the producer 1 and then delivered to the primary recycler 5 (collection 116 and delivery 117).

After receiving the waste product, the primary recycler 5 inquires of the producer 1 about the disposal of the waste product (inquiry about the disposal of product 118). When inquired of, the producer 1 creates instruction data (hereafter referred to as disassembly instruction) for the treatment of the waste product by the use of an information processing apparatus, which will be described later, for practicing the method of supporting the treatment of the waste product and deliver the disassembly instruction to the primary recycler 5 (disassembly instruction delivery 119). The primary recycler 5 disassembles the waste product according to the disassembly instruction, writes the disassembly evaluation (the result of disassembling operation) in the predetermined field in the disassembly instruction, and sends the instruction with the thus filled field back to the producer 1 (disassembly evaluation 122). After disassembly instruction delivery 119, some of the parts constituting the waste product which cannot be treated by the primary recycler 5 may be shipped to another recycler 6 (hereafter referred to as secondary recycler) (shipping 120). In this case, the information processing apparatus of the producer 1 creates a disassembly instruction for the secondary recycler 6 and delivers it to the secondary recycler 6 (disassembly instruction delivery 121). The secondary recycler 6, after disassembling the waste product, writes the disassembly evaluation in the predetermined field in the disassembly instruction, and sends the instruction with the thus filled field back to the producer 1 (disassembly evaluation 123). It should be noted that the disassembly instruction for the secondary recycler 6 may be delivered to the secondary recycler 6 via the primary recycler 5. It also happens that the secondary recycler 6 inquires of the producer 1 about the treatment of the waste product. In the embodiment of this invention described above, the treatment of the waste product is performed only by the primary and secondary recyclers. If, however, the parts constituting the waste product need to be shipped to additional recyclers (tertiary, quarterly, ...... recyclers), then additional flows such as flows 120 and 121 must be generated.

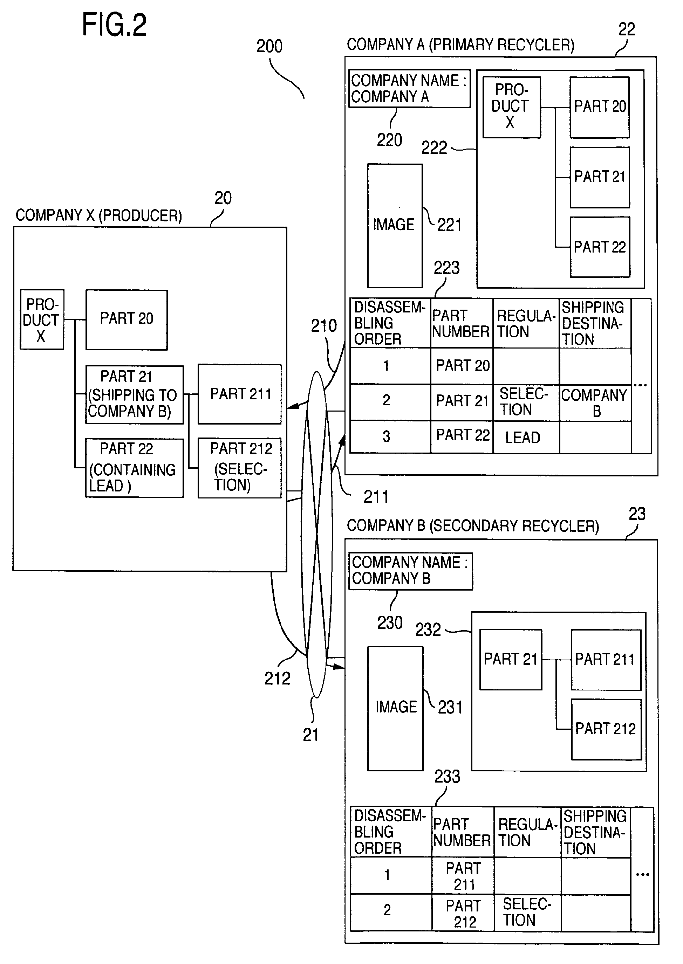

Fig. 2 schematically shows a method and a system according to this invention, for supporting the treatment of products and an information processing apparatus associated with the method and the apparatus. The system for supporting the treatment of products has its overall structure such that the plural information processing apparatus (e.g. servers) installed in plural producers are linked to the terminals of plural recyclers via a network such as the Internet. In the following, an embodiment of this invention will be described on the basis of a system 200 for supporting the treatment of products, as shown in Fig. 2, wherein the information processing apparatus 200 of a producer (e.g. Company X) is linked via a network 2100 to the terminal 2200 of a primary recycler (e.g. Company A) and the terminal 2300 of a secondary recycler (e.g. Company B). In Fig. 2, the diagram within the information processing apparatus 2000 a part structure diagram for a product X, illustrating the structure of the set of parts making up the product X. The product X comprises parts 20, 21, 22, 211 and 212, of which the part 212 indicates that it should be separated from the product X and subjected to a proper treatment regulated under the applicable law. The part 22 indicates that it contains lead which is under control of the European RoHS Directive (Directive on the restriction of the use of certain hazardous substances in electric and electronic equipment). The part 21 indicates that the primary recycler (Company A) treats the product X and that Company A ships the part 21 to the secondary recycler (Company B).

As described in detail later, when the information processing apparatus 2000 receives via a network 2100 an inquiry about the treatment of a product (data capable of identifying the product such as its product model number) from the terminal 2200 of the primary recycler (Company A) (reception 210), the information processing apparatus 2000 specifies the intended product on the basis of the received data and the plural pieces of the product data stored in the storage device thereof; creates instruction data (hereafter referred to as disassembly instruction) related to the treatment of a product or a part which should be specifically performed by the primary or secondary recycler by using the part structure data and the part attribution data of the specified product, the data of parts to be separated for proper treatments, and the data indicating both the parts shipped from the primary recycler to the secondary recycler and the name of the secondary recycler, all the data mentioned being stored in the storage device; and delivers the disassembly instruction to the terminals 2200 and 2300 of the primary and secondary recyclers (Company A and Company B), respectively (disassembly instruction delivery 211 and 212).

The terminals 2200 and 2300 of the primary and secondary recyclers (Company A and Company B) may enable the disassembly instruction delivered from the information processing apparatus to be displayed on their screens or to be output to the printers connected with them. In Fig. 2, on the screen of the terminal 2200 of the primary recycler (Company A) which has made an inquiry about the treatment of the product X, are displayed the name 220 of the primary recycler (Company A), the three-dimensional image 221 of the product X to be shipped to the primary recycler (Company A), the part structure diagram 222 of the product X, and the disassembly part table 223 showing the order of disassembling the product X. Since, as described above, the part 21 is to be shipped to the secondary recycler (Company B), the part structure diagram 222 of the terminal 2200 of the primary recycler (Company A) does not show the breakdown of the part 21. It is also possible for the part structure diagram 222 to show the breakdown of the part 21. Further, since the part 21 contains as its constituent a part 212 that is so regulated as to be separated and subjected to a proper treatment under the applicable law, the disassembly part table 223 indicates the external shipping destination (Company B) to which the part 21 shipped, together with the related instruction. Since the part 22 contains lead regulated under the applicable law such as the RoHS Directive, the disassembly part table 223 clarifies that the part 22 contains lead.

The screen of the terminal 2300 of the secondary recycler (Company B) displays the name 230 of the secondary recycler (Company B), the three-dimensional image 231 of the part 21 received by the secondary recycler (Company B), the part structure diagram 232 for the part 21, and the disassembly part table 233. Since the part 212 is what is so regulated as to be separated and subjected to a proper treatment under the applicable law, the disassembly part table 233 indicates that effect. In this embodiment, the inquiry by the recyclers of the producer about the treatment of waste products and the delivery of the disassembly instruction from the producer to the recyclers are performed through the transmission and reception of electronic data via the network 21. Such inquiry and delivery, however, may also be achieved by the use of paper medium.

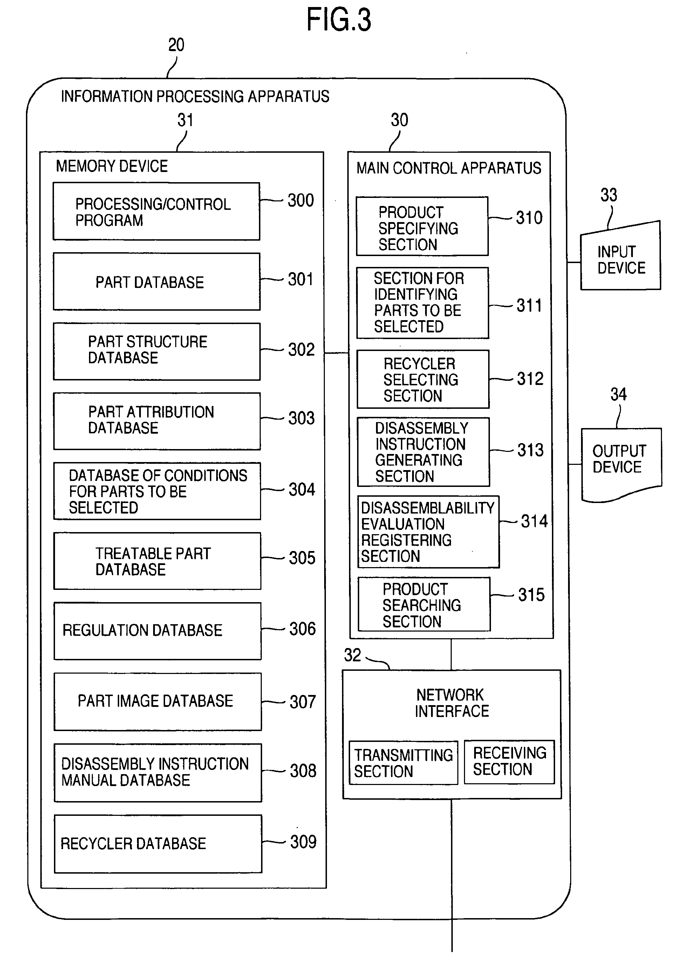

Fig. 3 schematically shows the structure of the information processing apparatus 2000 shown in Fig. 2, for practicing the method for supporting the treatment of products. The information processing apparatus 2000 comprises a main control device 30 such as a CPU, a memory device 31 and a network interface 32. An input device 33 for receiving the data of the database stored in the memory device 31 and an output device 34 for sending out the result of the processing performed by the information processing apparatus 2000 are connected with the information processing apparatus 2000. The input device 33 may be, for example, a terminal having a display device and the output device 34 may be, for example, a printer.

The memory device 31 in the information processing apparatus 2000 stores therein a processing/control program 300 necessary for the main control device 30 to control the information processing according to this invention and the information processing apparatus 2000 as a whole, a product database 301, a part structure database 302, a part attribution database 303, a database 304 of conditions for parts to be separated, a treatable part database 305, a regulation database 306, a part image database 307, a disassembly instruction database 308 and a recycler database 309. Alternatively, instead of being stored in the memory device 31, the program 300 and all the databases 301 through 309 may be stored in an external memory device outside the information processing apparatus 2000 and the information processing apparatus 2000 may access the databases stored in the external memory device via the internet or a specialized network circuit.

The data contained in the product database 301, the part structure database 302 and the part image database 307 are what is generated on the basis of the producer's design information and received from the producer via the input device 33. The data contained in the recycler database 309 is received from the producer via the input device 33. The data contained in the part attribution database 303 is generated by the producer on the basis of the part attribution information obtained from part supply firms and received from the producer via the input device 33. The data contained in the database 304 of conditions for parts to be separated and the regulation database 306 are generated by the producer on the basis of the law/regulation information such as the European WEEE Directive and received from the producer via the input device 33. The data contained in the treatable part database 305 is generated by the producer on the basis of the information on treatable parts obtained from recyclers and received from the producer via the input device 33. The disassembly instruction database 308 contains the disassembly instruction data generated by the information processing apparatus 2000. Alternatively, the content of the treatable part database 305 may be generated by the information processing apparatus 2000 requiring the terminal 2200 and 2300 of the recyclers to provide the information on treatable parts and then receiving the treatable part information from the terminals 2200 and 2300 of the recyclers via the network 2100. Or the content of the treatable part database 305 may be generated by the information processing apparatus 2000 requiring the terminal 2200 and 2300 of the recyclers to provide the information on treatable parts and then by the recyclers making access to the information processing apparatus 2000 for outputting the treatable part information to the database 305 via their terminals 2200 and 2300 and the network 2100 in response to the requirement of the information processing apparatus 2000.

The main control device 30 incorporated in the information processing apparatus 2000 comprises a product identifying section 310 for performing part treatment and control according to the processing/control program 300, a section 311 for identifying parts to be separated, a recycler selecting section 312, a disassembly instruction generating section 313, a disassemblability evaluation registering section 314 and a product searching section 315. The functions of the sections may be achieved by means of a specialized hardware. The processing/control program 300 also has a function of outputting a Web browser in which a recycler, when accessing the information processing apparatus 2000, inputs its ID and password and a function of identifying the recycler on the basis of the inputted ID and password and the information in the recycler database 309. These functions are not shown in Fig. 3, though.

The information processing apparatus 2000 further comprises a network interface 32 consisting of a receiving section for receiving via the network 2100 such information as on inquiry about the disassembly of products from the terminals of the recyclers and disassembly evaluations and a transmitting section for transmitting via the network 2100 the disassembly instruction generated by the main control device 30 to the terminals of the recyclers.

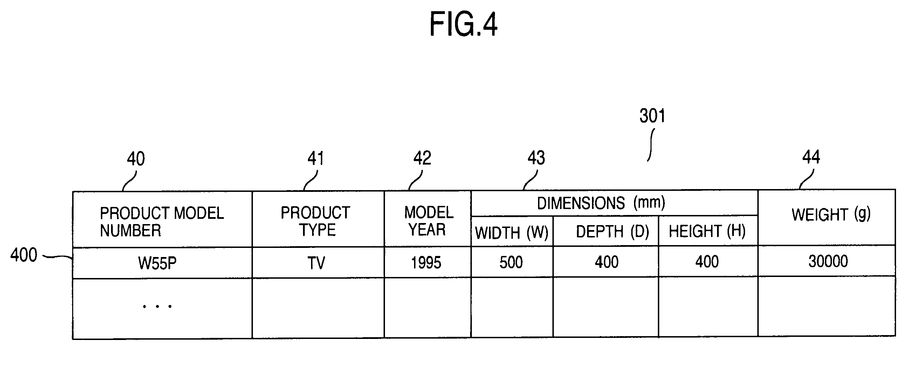

Fig. 4 shows the data structure of the product database 301. The product database 301 contains data related to products such as TVs, personal computers and washing machines. As concretely shown in Fig. 4, the product database 301 used in an embodiment of this invention is an aggregation of records, each consisting of items such as product model number 40 representing the model number of a product, product type 41 representing the type of product, model year 42 indicating the production year of the product of interest, dimensions 43 for specifying the width (W), depth (D) and height (H) of each product, and weight 44 denoting the weight of a product.

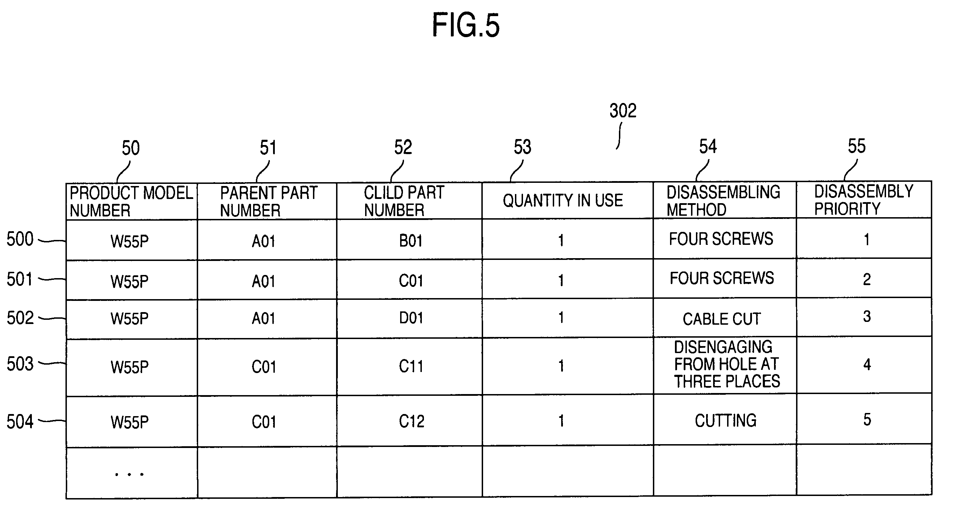

Fig. 5 shows the data structure of the part structure database 302. The part structure database 302 contains such data as part numbers representing the parent and child parts of products, numbers of parts (in use), disassembling processes, and the priority in the orders of disassembling. As concretely shown in Fig. 5, the part structure database 302 used in an embodiment of this invention is an aggregation of records, each consisting of items such as the model number 50 of each product, the parent part number 51 of the parent part of the product, the child part number 52 of the child part of the parent part, the number 53 of child parts used in each parent part, the disassembling process 54 for each child part, the disassembling priority 55 indicating the priority in disassembling each child part.

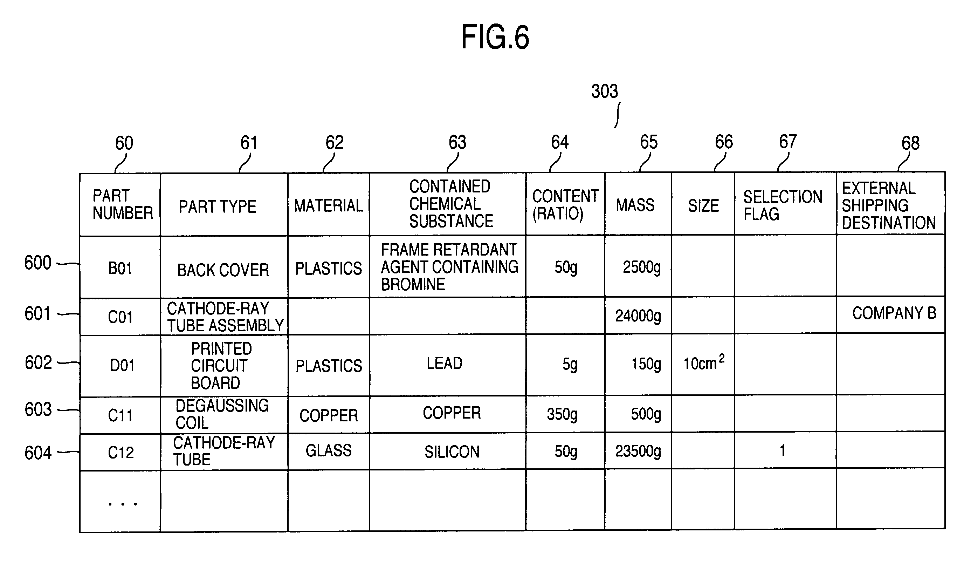

Fig. 6 shows the data structure of the part attribution database 303. The part attribution database 303 contains the data related to the constituent parts of products. As concretely shown in Fig. 6, the part attribution database 303 used in an embodiment of this invention is an aggregation of records, each consisting of items such as part number 60 of a part, part type 61, material 62 of the part, chemical substances 63 indicating the chemical substances contained in the part, content/content rate 64 indicating the content or percent content of the chemical substance contained in the part, mass 65 representing the weight of the part, size 66 of the part, selection flag 67 indicating the part to be separated and subjected to a proper treatment, and external shipping destination 68 to which the part is to be shipped if there is such a parts.

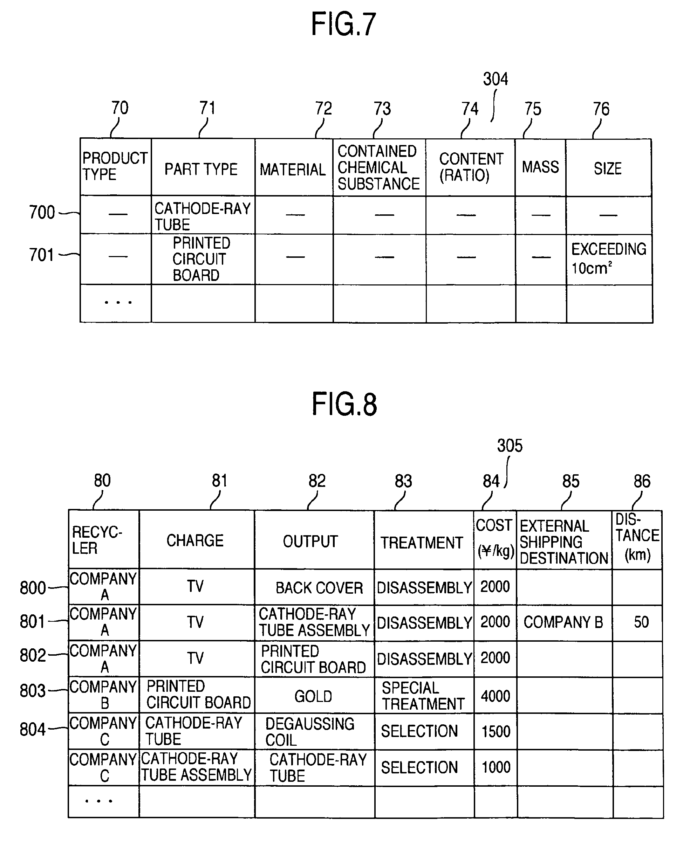

Fig. 7 shows the data structure of the database 304 of conditions for parts to be separated. The database 304 contains data related to the conditions for parts to be separated from a product and subjected to a proper treatment regulated under the applicable law of the country, e.g. European WEEE Directive, where the product is treated. As concretely shown in Fig. 7, the database 304 of conditions for parts to be separated, used in an embodiment of this invention is an aggregation of records, each consisting of items such as product type 70, part type 71, material 72 of the part, chemical substances 73 indicating the chemical substances contained in the part, content/content rate 64 indicating the content or percent content of each chemical substance contained in the part, mass 75 representing the weight of the part, and size 76 of the part.

Fig. 8 shows the data structure of the treatable part database 305. The treatable part database 305 contains data related to the treatable products and parts which recyclers can treat and to what is outputted as a result of treating the treatable products and parts by the recyclers. As concretely shown in Fig. 8, the treatable part database 305 used in an embodiment of this invention is an aggregation of records, each consisting of items such as recycler 80, charge 81 meaning the input to the system of treatable product or part, discharge 82 meaning the output of part as a result of treatment, treatment 83 indicating the type of treatment performed, cost 84 required for the related treatment, external shipping destination 85 to which the discharged part is shipped, distance 86 between the producer and any recycler or between one recycler and another. The recycler 80 may be represented by any information which can identify the firm, such as for example the ID of the recycler.

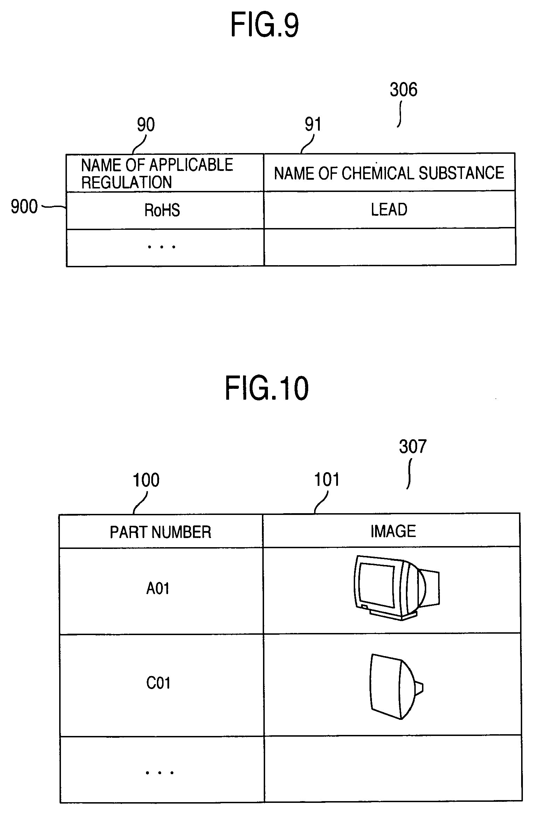

Fig. 9 shows the data structure of the regulation database 306. The regulation database 306 contains the names of chemical substances regulated globally under the applicable law and the corresponding governing law. As concretely shown in Fig. 9, the regulation database 306 used in an embodiment of this invention is an aggregation of records, each consisting of items such as the name of the applicable law 90 and the name of chemical substance 91 regulated by the law.

Fig. 10 shows the data structure of the part image database 307. The part image database 307 contains data representing the three-dimensional images of products or parts and the part numbers associated with the imaged parts. As concretely shown in Fig. 10, the part image database 307 used in an embodiment of this invention is an aggregation of records, each consisting of items such as part number 100 representing the part number of the parent or child part, and part image 101 associated with the part number.

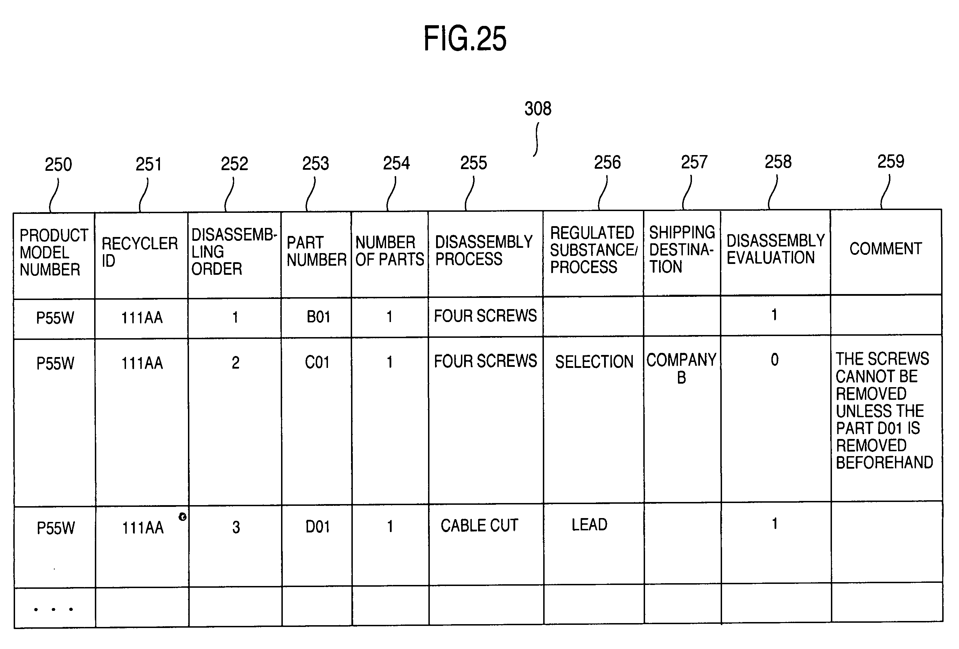

Fig. 25 shows the data structure of the disassembly instruction database 308. The disassembly instruction database 308 contains data representing the disassembly instructions generated by the information processing apparatus 20. As concretely shown in Fig. 25, the disassembly instruction database 308 used in an embodiment of this invention is an aggregation of records, each consisting of items such as product model number 250, recycler ID 251, disassembling order 252, part number 253, number 254 of parts, disassembling process 255, regulated objects or treatments 256, shipping destination 257, disassembly evaluation 258, and comment 259 on the disassembly evaluation. The disassembly evaluations 258 and the comment 259 on the disassembly evaluations are inputted by recyclers. This inputted information is used as feedback data for product designs by producers (designers).

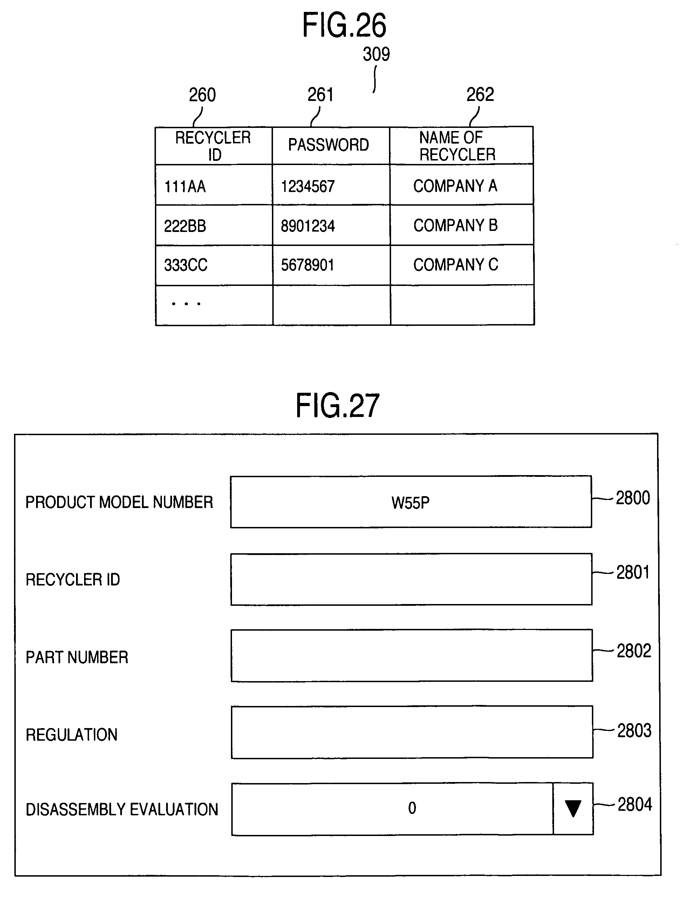

Fig. 26 shows the data structure of the recycler database 309. The recycler database 309 contains IDs and passwords necessary for recyclers to access the information processing apparatus 20. As concretely shown in Fig. 26, the recycler database 309 used in an embodiment of this invention is an aggregation of records, each consisting of items such as recycler ID 260, password 261 and the name of recycler 262.

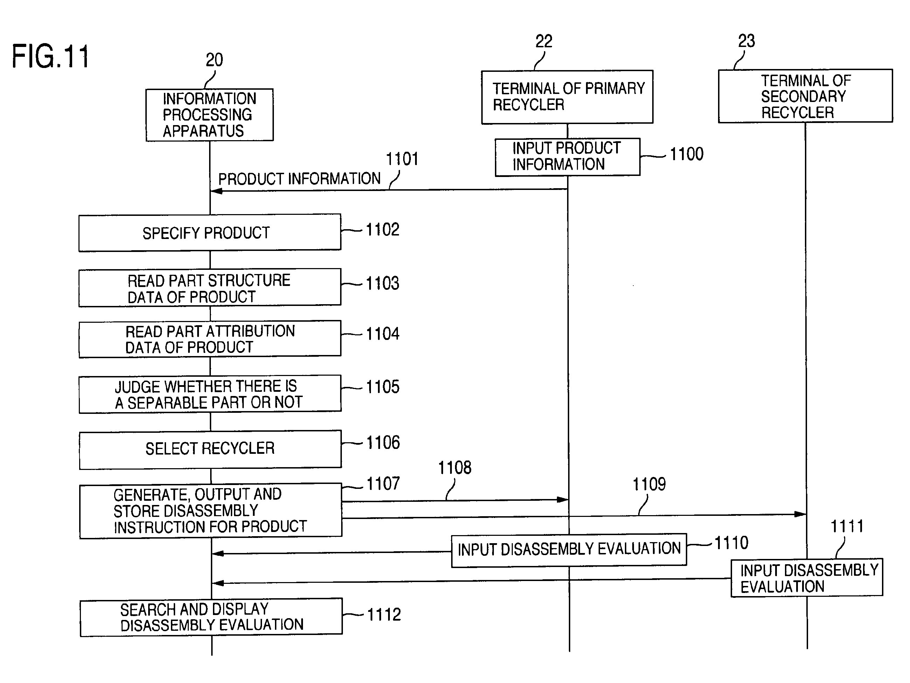

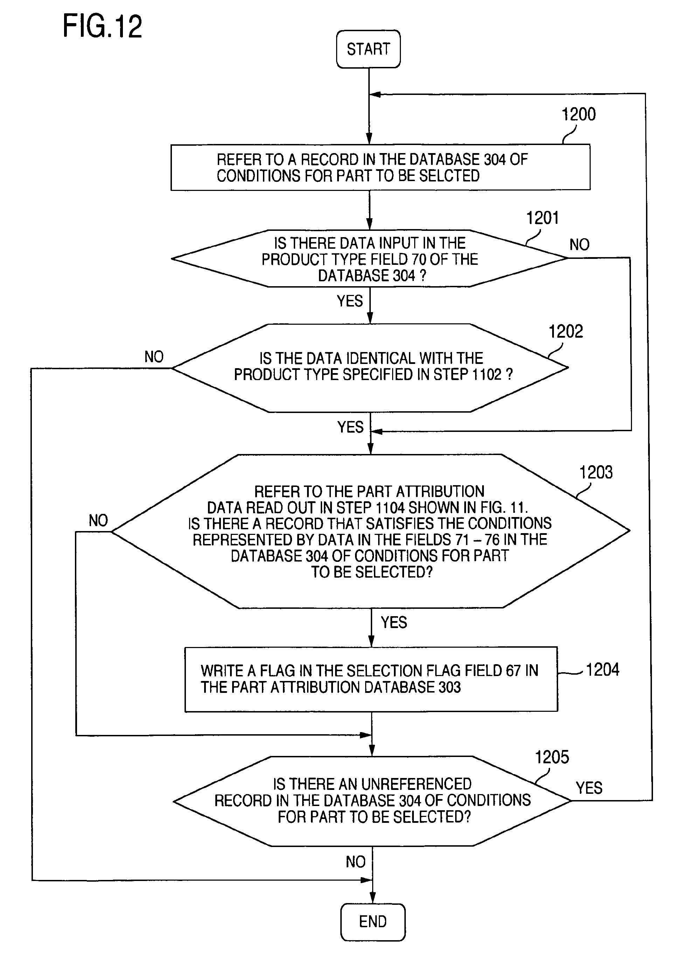

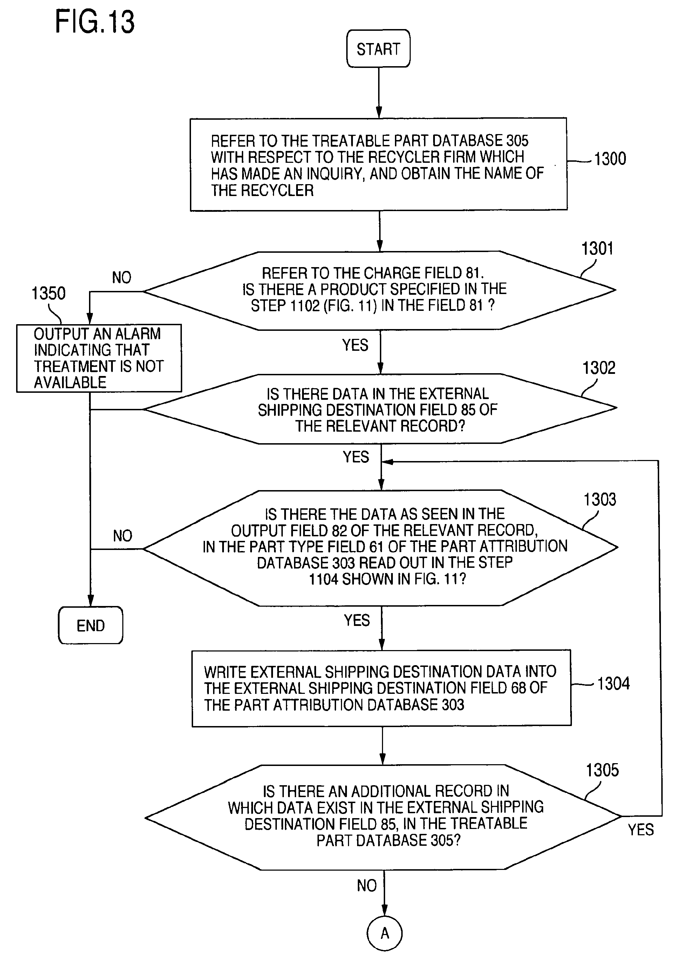

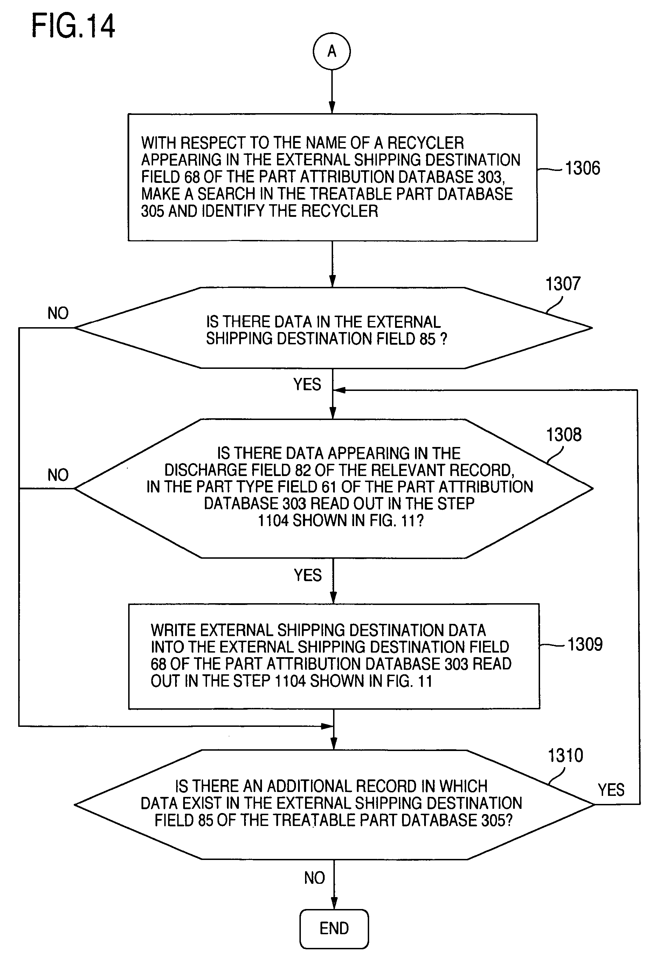

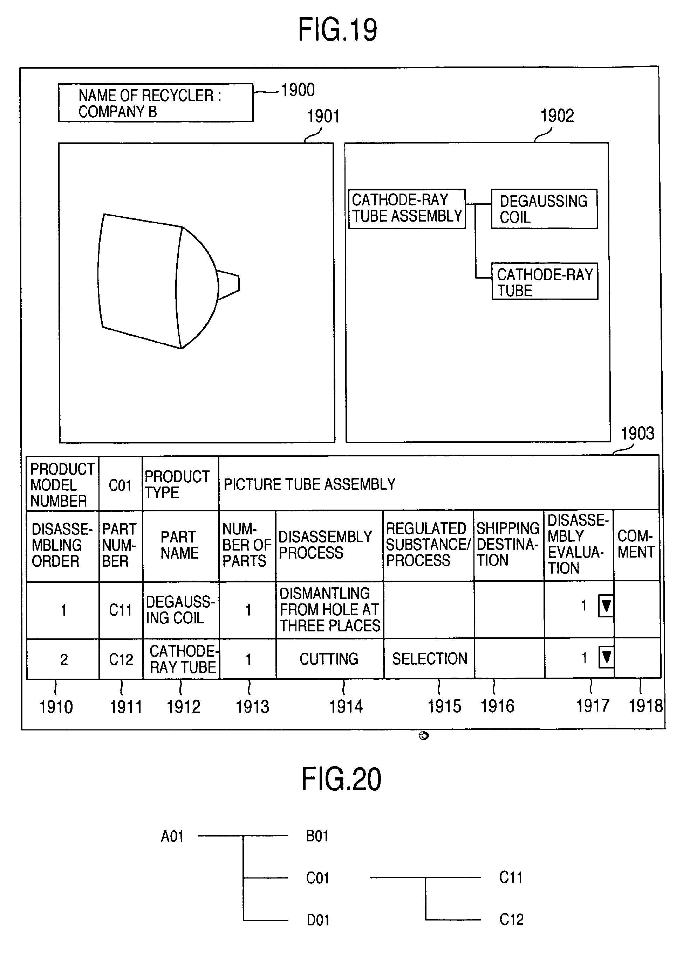

Fig. 11 is a flow chart for the treatment of product taking place in the system 200 for supporting the treatment of products shown in Fig. 2. Figs. 20 through 23 are the detailed flow charts for the product treatment shown in Fig. 11.

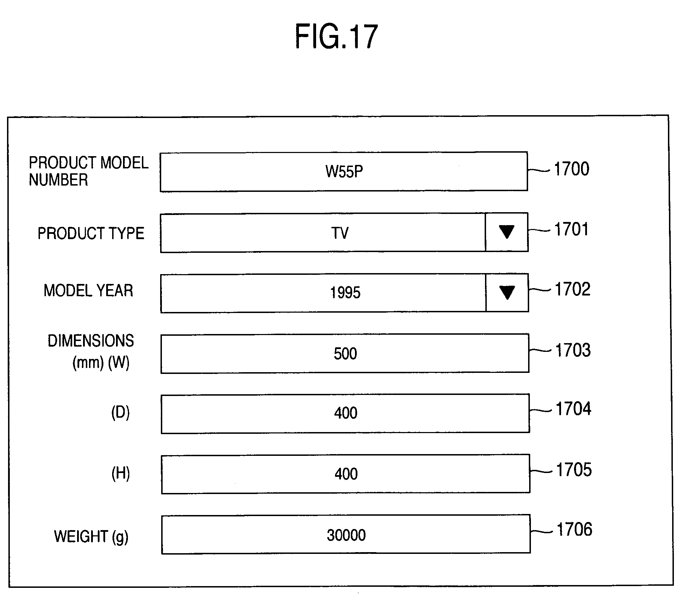

First, the primary recycler (e.g. Company A) receives from the input images (Fig. 17) of the terminal 2200 such product information as product model number 1700, product type 1701, model year 1702, dimensions (width W 1703, depth D 1704 and height H 1705) and weight 1706, and then makes inquiry about the treatment of products (Step 1100). Fig. 17 indicates that the input images of the terminal 2200 give W55P for the product model number 1700, TV for the product type 1701, 1995 for the model year 1702, 500 for the width W 1703, 400 for the depth D 1704, 400 for the height H 1705, and 30000 for the weight 1706.

The product information inputted from the terminal 2200 is transmitted to the information processing apparatus 2000 via the network 21. The transmitted product information is received by the network interface 32 incorporated in the information processing apparatus 2000. The product identifying section 310 incorporated in the main control device 30 searches the product database 301 on the basis of the product information received by the network interface 32 and identifies the product of interest (Step 1102). More specifically, the product identifying section 310 reads the information in the records of the product database 301, compares the read records with the received product information, and identifies a record identical with the received product information. In the example shown in Fig.4, it is apparent that the received product information is identical with the information represented by the record 400 of the product database 301. Although the case is here described where all the items 1700 through 1706 shown in Fig. 17 are received as the required product information. It, however, is not necessary for all the items to be received for comparison if the product of interest can be identified by reference to fewer items. When the product model number of the product of interest is received, the search of the product database on the basis of the product model number makes the identification of the product much easier. Unless the product model number is received, such information as model year or dimensions will help identifying the product. If a wanted product cannot be identified by using the product information received from the terminal 2200, data closest to that of the wanted product is used. For example, the product identifying section 310 searches the product database 301 with respect to the product model number in the product information received from the terminal 2200. If the corresponding product model number cannot be found in the product database 301, the product database 301 is searched with respect to some other items of the received product information. When data having an item identical with one of the items in the received product information is found, the data having the identical item is displayed on the screen of the terminal 2200. The recycler can select and use any of the displayed data.

The section 311 for identifying parts to be separated searches the part structure database 302 with respect to the product model number "W55P" specified by the part identifying section 310, and reads out the part structure data corresponding to the product model number "W55P" (Step 1103). In the example shown in Fig. 5, the records 500 through 504 correspond to the product model number "W55P". Fig. 20 shows the part structure diagram for the product corresponding to the product model number "W55P".

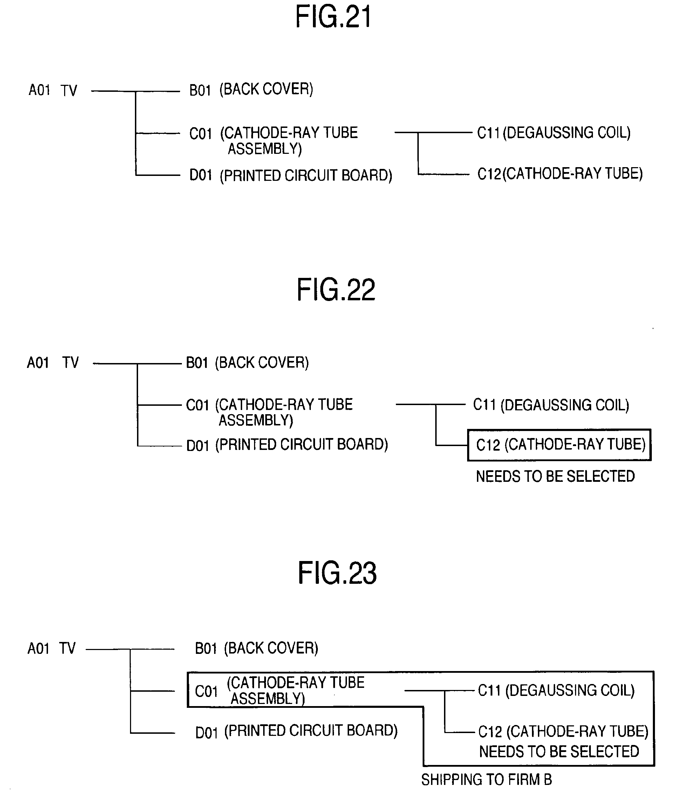

The section 311 for identifying parts to be separated searches the part attribution database 303 with respect to the read part number, and reads out the part attribution data corresponding to the part number (Step 1104). In the example shown in Fig. 6, the records 600 through 604 correspond to the read-out part numbers "B01", "C01", "D01", ""C11", and "C12", respectively. Fig. 21 shows the part structure diagram wherein the information on the part types 61 of the records 600 through 604 is added to the part structure diagram shown in Fig. 20.

The section 311 for identifying parts to be separated refers to the data contained in the records of the database 304 of conditions for parts to be separated on the basis of the part attribution data read out in Step 1104, and judges whether there is a part to be separated and subjected to a proper treatment (Step 1105). In Fig. 7 showing the database 304 of conditions for parts to be separated, "cathode-ray tube" of the record 700 is meant to be a part which should be separated and subjected to a proper treatment, irrespective of its material and contained chemical substances. As shown Fig. 6, the part type 61 of the record 604 indicates that a "cathode-ray tube" is included in the product "TV" specified in Step 1102. Accordingly, the "cathode-ray tube" as a constituent part of the "TV" is regarded as a part to be separated and subjected to a proper treatment. This result is reflected in the part structure diagram of Fig. 21 to give rise to a part structure diagram of Fig. 22.

The recycler selecting section 312 refers to the treatable part database 305; judges, with respect to the primary recycler (Company A) having made an inquiry, whether there is any part among the constituent parts ("back cover", "cathode-ray tube assembly", "printed circuit board", "degaussing coil", and "cathode-ray tube") of the product ("TV") specified in Step 1102, that must be shipped to a secondary recycler, and also judges which secondary recycler should be selected if there is such a part to be shipped to a secondary recycler; and selects the recycler which performs the disassembling method of the specified product (Step 1106). The external shipping destination 85 of the record 801 shown in Fig. 8 indicates that the primary recycler (Company A) performs the disassembling method of the "TV" while the "cathode-ray tube assembly" as constituent parts of the "TV" is shipped to the secondary recycler (Company B). This result is reflected in the part structure diagram of Fig. 22 to give rise to a part structure diagram of Fig. 23.

The disassembly instruction generating section 313 generates and outputs for the primary and secondary recyclers the disassembly instructions for parts and products on the basis of the data contained in the regulation database 306 and the part image database 307 in addition to the data, obtained in Steps 1101 through 1106, on part, part structure, part attribution, parts to be separated and subjected to a proper treatment, part to be shipped and external shipping destination (Step 1107). When generating a disassembly instruction, the disassembly instruction generating section 313 refers to the regulation database 306 and judges whether there is any part that contains substances regulated under the applicable law, among the parts constituting a certain product. If there is such a problematic part, that fact is outputted into the disassembly instruction. In this embodiment, it is understood from the record 602 of the part attribution database 303 shown in Fig. 6 and the record 900 of the regulation database 306 shown in Fig. 9 that the "printed circuit board" contains "lead" regulated under the RoHS Directive. The disassembly instruction outputted from the disassembly instruction generating section 313 is delivered via the network interface 32 and the network 2100 to the terminals 2200 and 2300 of the primary and secondary recyclers (Firms A and B). Also, the disassembly instruction generating section 313 causes the disassembly instruction data to be stored in the disassembly instruction database 308 (Steps 1108 and 1109).

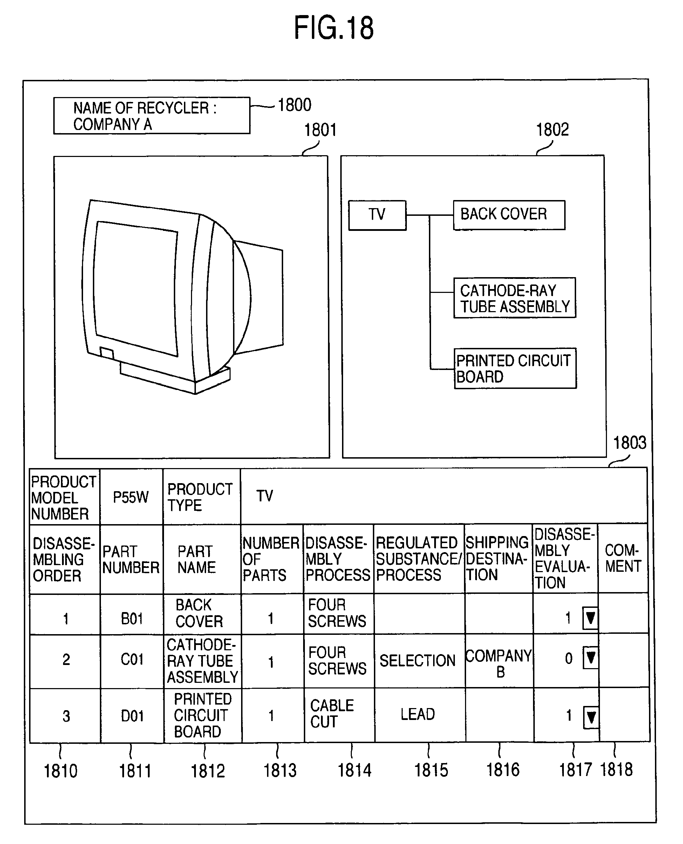

Fig. 18 shows an example of output image displayed on the screen of the terminal 2200 of the primary recycler (Company A). As described above, the screen of the terminal 2200 displays thereon the name of a recycler 1800, the three-dimensional image 1801 of a product or parts to be delivered to the recycler, a part structure diagram 1802, and a disassembly part table 1803. As depicted in Fig. 18, the recycler 1800 is Company A which has made an inquiry about the treatment of a product, the three-dimensional image 1801 is a "TV", and the part structure diagram 1802 shows the part structure down to a "cathode-ray tube assembly". The disassembly part table 1803 shows the disassembly order 1810 for the parts represented by the part structure diagram 1802 of the "TV", the part number 1811, the part name 1812, the number 1813 of parts, the disassembling process 1814, the regulated substance/treatment 1815 indicating whether the part of interest contains substances regulated under the applicable law or should be separated and subjected to a proper treatment, the shipping destination 1816 indicating the recycler to which the part is shipped if there is a part to be shipped to another recycler, the disassembly evaluation 1817, and the comment 1818 on the disassembly evaluation. Here, it is understood from the regulated substance/treatment 1815 and the shipping destination 1816 of the disassembly part table 1803 that the "cathode-ray tube assembly" includes a part to be separated and subjected to a proper treatment and is a part that must be shipped to "Company B". It is also understood from the regulated substance/treatment 1815 of the disassembly part table 1803 that the "printed circuit board" contains lead that is regulated under the applicable law. The data corresponding to the disassembly order 1810 and the disassembling process 1814 of the disassembly part table 1803 depends on the data corresponding to the disassembly priority 55 and the disassembling process 54 of the part structure database 302. In this embodiment, the data corresponding to the disassembly evaluation 1817 assumes "1" if there is no problem in disassembly, but "0" if there is a problem in disassembly. When the disassembly evaluation 1817 assumes "0", the recycler must input its comment on the disassembly evaluation in the comment field 1818. It is also possible for the recycler to input its comment in the comment field 1818 even in the case where the disassembly evaluation is "1".

Fig. 19 shows an example of output image displayed on the screen of the terminal 2300 of the secondary recycler (Company B). As described above, since the "cathode-ray tube assembly" cannot be treated by the primary recycler (Company A), it is shipped to the secondary recycler (Company B). Just as in Fig. 18, the screen of the terminal 2300 displays thereon the recycler (Company B) 1900, the three-dimensional image 1901 of the "cathode-ray tube assembly" to be delivered to "Firm C", the part structure diagram 1902 for the "cathode-ray tube assembly", and the disassembly part table 1903. It is here understood from the data shown in the regulated substance/process 1915 of the disassembly part table 1903 that the "cathode-ray tube assembly" is a part that must be separated and subjected to a proper treatment.

When the primary recycler, after having performed the disassembling method of a product according to the disassembly instruction, desires to input its disassembly evaluation and comment on the disassembly evaluation in the corresponding fields of the disassembly evaluation 1817 and the comment 1818 on the disassembly evaluation (Fig. 18), it must input the recycler ID displayed on the screen of the terminal 2200 and the recycler ID and the password displayed on the password input screen. The information processing apparatus 2000 performs the identification treatment on the basis of the inputted recycler ID and password and the information in the recycler database 309. When the identification is completed, the primary recycler accesses via the network 2100 that disassembly instruction which has its own ID so that it can input desired data in the fields of the disassembly evaluation 1817 and the comment 1818 on the disassembly evaluation. The inputted data is reflected in the disassembly instruction database 308 by means of the disassemblability evaluation registering section 314 (Step 1110). When the secondary recycler, after having performed the disassembling method of a product according to the disassembly instruction, desires to input its disassembly evaluation and comment on the disassembly evaluation in the corresponding fields of the disassembly evaluation 1817 and the comment 1818 on the disassembly evaluation (Fig.18), the procedure is similar to that performed in Step 1110 (Step 1111).

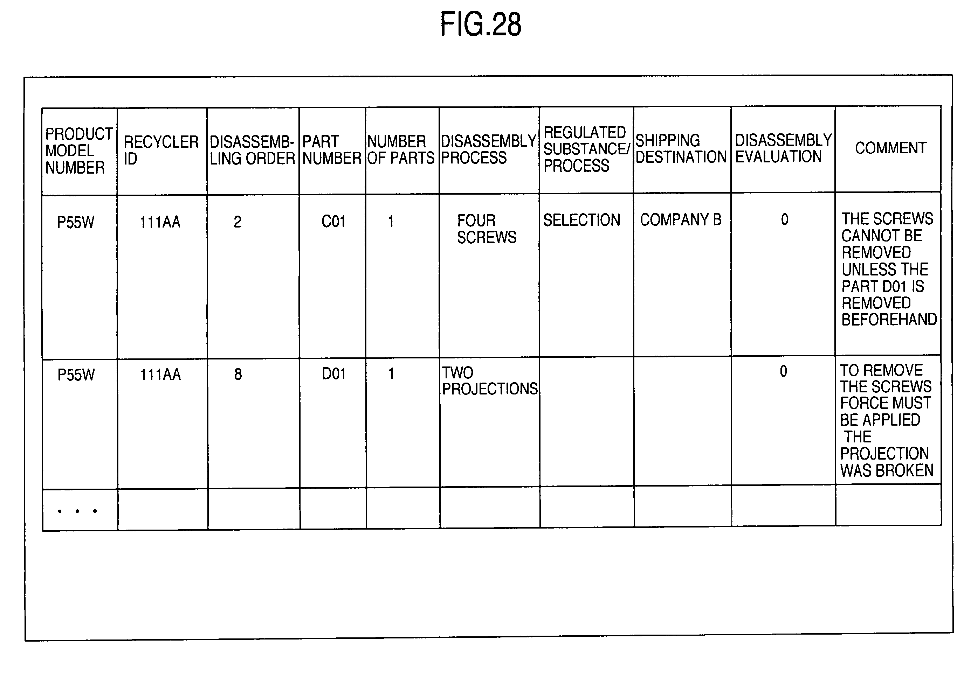

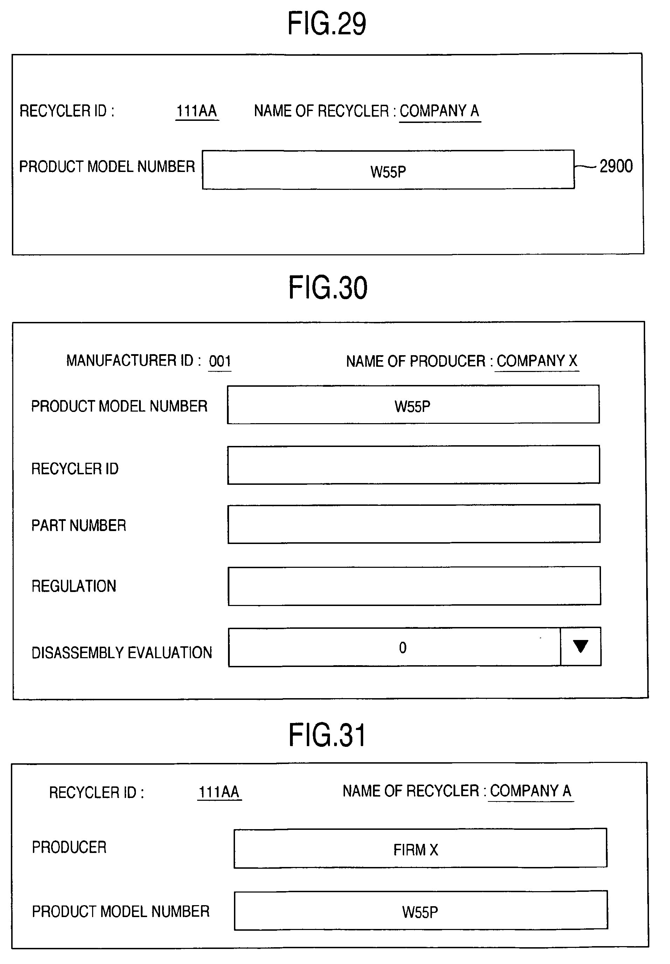

When the producer desires to refer to the disassembly evaluation inputted by the recycler, it fetches the items 2800 through 2804 from the product search image (Fig. 27) appearing on the display of the input device 33. The product searching section 315 of the information processing apparatus 2000 searches the disassembly instruction database 308 on the basis of the fetched information and shows the searched result on the display of the input device 33 (Fig. 28) (Step 1112). When the recycler desires to refer to the disassembly evaluation inputted by itself, it fetches the product model number 2900 from the product search image shown in Fig. 29 after the above described identification step has been completed. The product searching section 315 of the information processing apparatus 2000 searches the disassembly instruction database 308 on the basis of the recycler ID and the fetched product model number 2900 and transmits the searched result via the network 21 to the terminal of the recycler which desires to refer to the disassembly evaluation inputted by itself.

Now the details of the treatments performed by the section 311 for identifying parts to be separated, the recycler selecting section 312 and the disassembly instruction generating section 313 will be described below.

Fig. 12 is a flow chart showing the details of the treatment performed by the section 311 for identifying parts to be separated. The section 311 first refers to the data in the records of the database 304 of conditions for parts to be separated on the basis of the part attribution data read out in Step 1104 shown in Fig. 11 and then judges whether there is a part to be separated and subjected to a proper treatment.

The section 311 for judging parts to be separated refers to a record in the database 304 of conditions for parts to be separated (Step 1200) and judges whether there is data inputted in the field of the product type 70 (Step 1201). If data is inputted in the field of the product type 70 in Step 1201, the section 311 for identifying parts to be separated judges whether the data in the product type field is identical with the product type specified in Step 1102 shown in Fig. 11 (Step 1202). If there is a coincidence between them, the section 311 refers to the part attribution data read out in Step 1104 shown in Fig. 11 and judges whether there is a record which satisfies the conditions represented by the data of the fields 71 through 76 in the database 304 of conditions for parts to be separated (Step 1203). If there is such data as satisfies those conditions, the section 311 for identifying parts to be separated writes a flag in the selection flag field 67 of the corresponding record in the part attribution database 303 so as to clarify that the part of interest is one to be separated (Step 1204). Then, the section 311 for identifying parts to be separated judges whether there is any record that has not been referred to in the database 304 of conditions for parts to be separated. If there is a record that has not been referred to, the treatment specified in Step 1200 is resumed. If there is not such a record, the treatment operation is finished (Step 1205). Thus, the section 311 for identifying parts to be separated performs the treatments specified in Steps 1201 through 1204 on all the records in the database 304 of conditions for parts to be separated.

When there is no data input in Step 1201, the section 311 for identifying parts to be separated proceeds to the treatment specified in Step 1203. In Step 1202, if the data in the product type field 70 is not identical with the product type specified in Step 1102 shown in Fig. 11, the section 311 finishes its treatment operation. In Step 1203, if there is no data to satisfy the condition of interest, the section 311 for identifying parts to be separated proceeds to the treatment specified in Step 1205.

Figs. 13 and 14 are flow charts showing the details of the treatments performed by the recycler selecting section 312. The recycler selecting section 312 refers to the treatable part database 305, judges whether the recycler having made an inquiry has any product or constituent parts of a product or a part that must be shipped to an external recycler, and selects the external recycler to which the product or constituent part is to be shipped if there is such a product or constituent parts, and which treats the product or the constituent parts.

The recycler selecting section 312 searches the treatable part database 305 with respect to the recycler that has made an inquiry and locates the recycler of interest (Step 1300). The section 312 then refers to the charge field 81 of the relevant record and judges whether the product specified in Step 1102 shown in Fig. 11 is stored there (Step 1301). In Step 1301, if there is the product specified in Step 1103, the recycler selecting section 312 refers to the external shipping destination field 85 of the relevant record and checks whether there is data in it (Step 1302). In Step 1302, if there is data in the external shipping destination field 85, the section 312 judges whether such data as contained in the discharge field 82 of the relevant record is also contained in the part type field 61 in the part attribution data read out in Step 1104 shown in Fig. 11 (Step 1303). In Step 1303, if the part type field 61 contains the data identical with that contained in the discharge field 82, the recycler selecting section 312 writes the external shipping destination data in the external shipping destination field 68 of the relevant record in the part attribution database 303 (Step 1304).

The recycler selecting section 312 refers to the external shipping destination fields 85 in the treatable part database 305 and judges whether there is an additional record whose external shipping destination field 85 contains any data (Step 1305). In Step 1305, if there is a record whose external shipping destination field 85 contains data, the section 312 resumes the treatment specified in Step 1303. If there is no such record, the section 312 searches the treatable part database 305 with respect to the name of the recycler written in the external shipping destination field 68 in the part attribution data read out in Step 1104 shown in Fig. 11 and locates the recycler of interest (Fig. 14 - Step 1306). The recycler selecting section 312 then refers to the external shipping destination field 85 of the relevant record in the treatable part database 305 and judges whether there is data in it (Step 1307). In Step 1307, if there is data in the external shipping destination field 85, the section 312 judges whether such data as contained in the discharge field 82 of the record is also contained in the part type field 61 in the part attribution data read out in Step 1104 shown in Fig. 11 (Step 1308). In Step 1308, if the part type field 61 contains such data as contained in the discharge field 82, the recycler selecting section 312 writes the external shipping destination data in the external shipping destination field 68 of the relevant record in the part attribution data read out in Step 1104 shown in Fig. 11 (Step 1109).

The recycler selecting section 312 refers to the external shipping destination fields 85 in the treatable part database 305 and judges whether there is an additional record whose external shipping destination field 85 contains any data (Step 1310). In Step 1310, if there is a record whose external shipping destination field 85 contains data, the section 312 resumes the treatment specified in Step 1308. If there is no such record, the section 312 finishes its treatment operation. If there are plural recyclers which can treat a product or a part, the recycler selecting section 312 selects a particular recycler in such a manner that the treatment cost and the shipping distance can be minimized, depending on the data in the cost field 84 and, if there is a part shipped from the recycler to an external recycler, the data in the distance field 86 representing the shipping distance between those recyclers. In Step 1301, if there is no product specified in Step 1102, the recycler selecting section 312 may, for example, transmit to the terminal of the recycler having made an inquiry the alarm indicating that the firm cannot perform the treatment (Step 1350). In this case, however, since it may happen that the relevant data in the treatable part database 305 is erroneous or not updated, it is preferable that the producer should ask the recycler to check or correct the data in the treatable part database 305. In Steps 1302 and 1307, if there is no data in the external shipping destination field 85, the recycler selecting section 312 finishes its treatment operation. In Steps 1303 and 1308, if the part type field 61 does not contain such data as contained in the discharge field 82, the recycler selecting section 312 finishes its treatment operation.

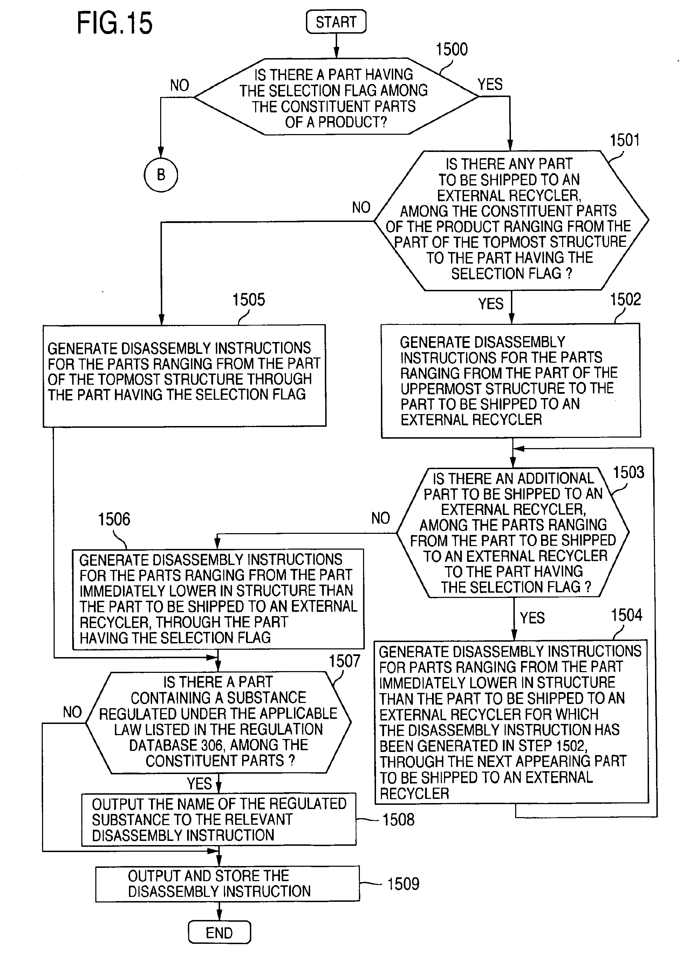

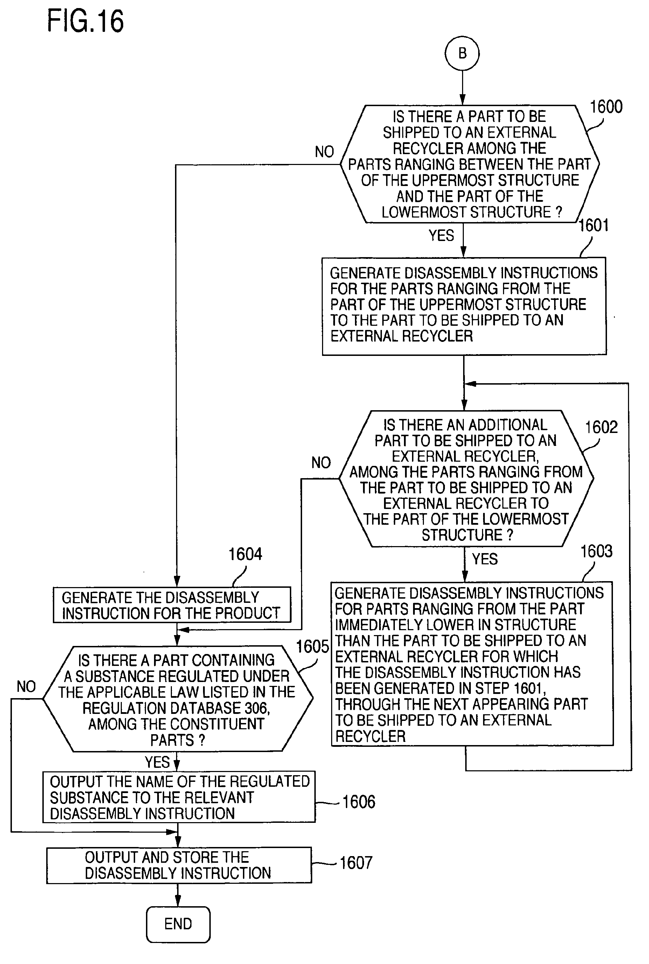

Figs. 15 and 16 are flow charts showing the details of the treatments performed by the disassembly instruction generating section 313. The disassembly instruction generating section 313 generates and outputs instruction data (disassembly instruction) for recyclers, related to the treatment of a product or the constituent parts of the product, by using part structure data and part attribution data for specified products, data of parts to be separated and subjected to a proper treatment, data representing an external recycler and a part shipped to the external recycler, and data stored in the regulation database 306 and the part image database 307.

The disassembly instruction generating section 313 refers to the part attribution data read out in Step 1104 shown in Fig. 11 and judges whether there is a part among the constituent parts of a product, which has a selection flag in its selection flag field (Step 1500). In Step 1500, if there is a part having a selection flag, the section 313, on the basis of the part structure data of a product stored in the part structure database 302 and the part attribution data of the product stored in the part attribution database 303, judges whether there is a part to be shipped to an external recycler, among the parts ranging from the par of the uppermost structure to the part having the selection flag, included in the part structure database 302 for the product (Step 1501).

In Step 1501, if there is a part to be shipped to an external recycler, the disassembly instruction generating section 313 generates disassembly instructions covering parts ranging from a part of the uppermost structure to a part to be shipped to an external recycler, on the basis of the data stored in the part structure database 302, the part attribution database 303, the database 304 of conditions for parts to be separated and the part image database 307 (Step 1502) . The disassembly instruction generating section 313 first refers to the part structure data for a product in the part structure database 302 and the part attribution data in the part attribution database 303, and then judges whether there is an additional part to be shipped to the external recycler, by scanning the relevant database from a part to be shipped to the external recycler to a part having a selection flag (Step 1503). In Step 1503, if there is an additional part to be shipped to the external recycler, the disassembly instruction generating section 313 generates disassembly instructions for additional parts to be shipped to the external recycler, that are lower in structure than the part for which the disassembly instruction has been generated in Step 1502, on the basis of the data stored in the part structure database 302, the part attribution database 303, the database 304 of conditions for parts to be separated and the part image database 307 (Step 1504).

In Step 1501, if there is no part to be shipped to an external recycler, the disassembly instruction generating section 313 generates disassembly instructions for parts ranging from a part of the topmost structure to a part having a selection flag, on the basis of the data stored in the part structure database 302, the part attribution database 303, the database 304 of conditions for parts to be separated, and the part image database 307 (Step 1505). In Step 1503, if there is no additional part to be shipped to the external recycler, the disassembly instruction generating section 313 generates disassembly instructions for parts ranging from a parts that is lower in structure than the part to be shipped to the external recycler to a part having a selection flag, on the basis of the data stored in the part structure database 302, the part attribution database 303, the database 304 of conditions for parts to be separated and the part image database 307 (Step 1506).

After the treatments in Steps 1505 and 1506, the disassembly instruction generating section 313 refers to the regulation database 306 and the part attribution database 303, and judges whether there is a part among the constituent parts of the product of interest that contains a substance 91 to be regulated under the applicable law (Step 1507). In Step 1507, if there is a part among the constituent parts of the product of interest that contains a substance to be regulated under the applicable law, the disassembly instruction generating section 313 outputs the name of the regulated substance to the relevant disassembly instruction (Step 1508). The section 313 then outputs the thus compiled disassembly instruction. The outputted disassembly instruction is delivered via the network 2100 to the terminals of the respective recyclers. The disassembly instruction generating section 313 also causes the data on the compiled disassembly instruction to be stored in the disassembly instruction database 308 (Step 1509).

In Step 1500, if there is no part having a selection flag, the disassembly instruction generating section 313 judges whether there is a part to be shipped to an external recycler, among parts ranging from a part of the uppermost structure to a part of the lowermost structure, on the basis of the part structure data and the part attribution data of the above mentioned product (Step 1600). In Step 1600, if there is a part to be shipped to an external recycler, the section 313 generates disassembly instructions covering parts ranging from a part of the uppermost structure to a part to be shipped to an external recycler, on the basis of the data stored in the part structure database 302, the part attribution database 303, the database 304 of conditions for parts to be separated and the part image database 307 (Step 1601). Then, the disassembly instruction generating section 313 judges whether there is an additional part to be shipped to an external recycler, among parts ranging form a part to be shipped to an external recycler to a part of the lowermost structure, on the basis of the part structure data and the part attribution data of the product of interest stored in the part structure database 302 and the part attribution database 303, respectively (Step 1602). In Step 1602, if there is an additional part to be shipped to an external recycler, the section 313 generates disassembly instructions for parts that are lower in structure than that part to be shipped to an external recycler for which the disassembly instruction has been generated in Step 1601, on the basis of the data stored in the part structure database 302, the part attribution database 303, the database 304 of conditions for parts to be separated and the part image database 307 (Step 1603).

In Step 1600, if there is no part to be shipped to an external recycler, the disassembly instruction generating section 313 generates a disassembly instruction for a product on the basis of the data stored in the part structure database 302, the part attribution database 303, and the part image database 307 (Step 1604). After the treatments in Steps 1602 and 1604, the section 313 refers to the regulation database 306 and the part attribution database 303, and judges whether there is a part among the constituent parts of the product of interest that contains a substance 91 to be regulated under the applicable law (Step 1605). In Step 1605, if there is a part among the constituent parts of the product of interest that contains a substance to be regulated under the applicable law, the disassembly instruction generating section 313 outputs the name of the regulated substance to the relevant disassembly instruction (Step 1606). The section 313 then outputs the thus compiled disassembly instruction. The outputted disassembly instruction is delivered via the network 21 to the terminals of the respective recyclers. The disassembly instruction generating section 313 also causes the data on the compiled disassembly instruction to be stored in the disassembly instruction database 308 (Step 1607).

According to the embodiment of this invention as described above, since each particular one of plural recyclers can be provided with that information on the disassembling method of products which the particular recycler alone needs, the work efficiency of the recycler can be improved.

Further according to the embodiment of this invention as described above, the information processing apparatus can automatically generate the disassembly instruction for a product or a part, a producer's efficiency in generating a disassembly instruction can be improved.

Furthermore according to the embodiment of this invention as described above, since the producer can refer to the disassembly evaluations and the comments on the disassembly evaluations inputted by the recyclers, the producer can feed such information back to its product design.

Another Embodiment of this invention will now be described.

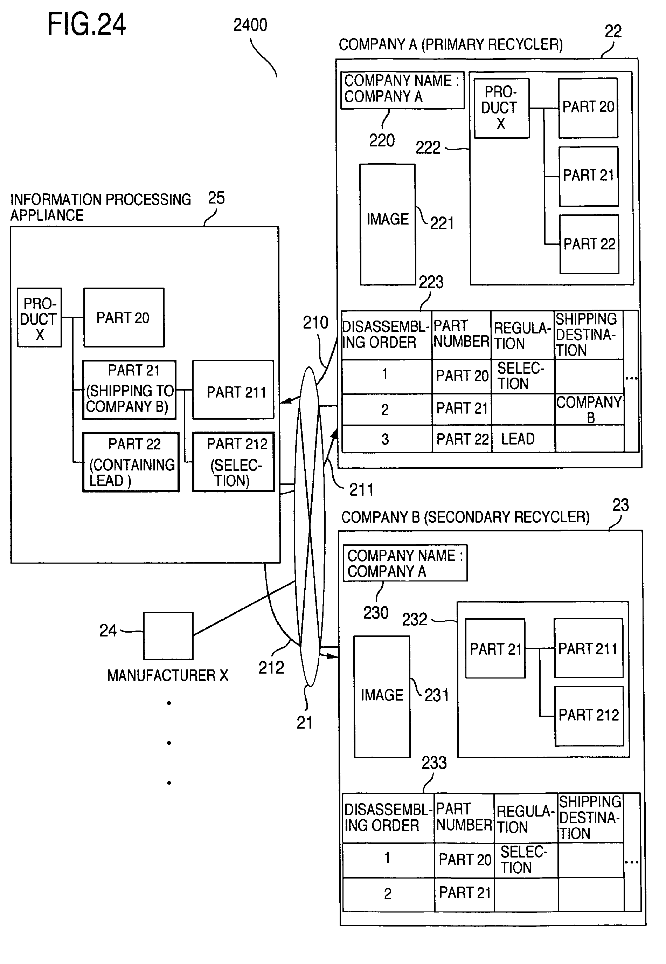

Fig. 24 schematically shows a method and a system, as another embodiment of this invention, for supporting the treatment of products and an information processing apparatus associated with the method and the apparatus. As shown in Fig. 24, a system 2400 for supporting the treatment of products has its overall structure such that an information processing apparatus 25 owned by an intermediate firm is connected via a network 2100 with the terminals 24 of plural producers (X, Y, ...... ), the terminal 2200 of a primary recycler (e.g. Company A) and the terminal 2300 of a secondary recycler (e.g. Company B). The internal structure of the information processing apparatus 25 is the same as that shown in Fig. 3. The difference of this embodiment from the embodiment described above is in that the product data, the part structure data, etc. administered by the respective producers are stored in the information processing apparatus 25. The treatments performed according to the processing/control program by the information processing apparatus 25 are similar to those described with the foregoing embodiment.

As shown in Fig. 24, when the information processing apparatus 25 receives (210) via the network 2100 such an inquiry (product specifying data such as product model number) from the terminal 2200 of the primary recycler (Company A) as related to the treatment of product X (product of producer X), the information processing apparatus 25 specifies the product of interest on the basis of the product specifying data and the product data stored in the memory device; generates instruction data (disassembly instruction) related to the treatment of the products or parts the disassembling method of which the primary and secondary recyclers can independently and separately perform, by using such data stored in the storage device as the part structure data and the part attribution data of the above specified product, the data of parts to be separated and subjected to a proper treatment, and the data indicative of the parts to be shipped from the primary recycler to the secondary recycler and of the secondary recycler; and outputs the generated instruction data to the terminals 2200 and 2300 of the primary and secondary recyclers (211, 212).

Further, although not shown, the record of the disassembly instruction database 308 includes the producer ID field. The memory device of the information processing apparatus 25 is provided with a producer database for storing the IDs, passwords and names of producers in a meaningful combination. The information for the producer database is inputted by the administrator of the information processing apparatus 25. Just as in the foregoing embodiment, the information processing apparatus 25 performs identification treatment on the basis of the ID and password of a producer inputted by the producer and the information contained in the producer database. Upon completion of identification, the producer accesses the disassembly instruction which is labeled with the ID of the producer itself, via the network 2100 so that it can refer to the disassembly evaluation 1817 and the comment 1818 on the disassembly evaluation. Fig. 30 shows the product search image displayed on the screen of the terminal 24 of the producer. Fig. 31 shows the product search image displayed on the screen of one of the terminals 22 and 23 of the recyclers.

According to this embodiment, since each particular one of plural recyclers can be provided with that information on the disassembling method of products which the particular recycler alone needs, the work efficiency of the recycler can be improved.

Further, according to this embodiment, since the information processing apparatus can automatically generate disassembly instructions for products or parts, producers' efficiency in generating disassembly instructions can be improved.

Furthermore, according to this embodiment, since producers can refer to the disassembly evaluations and the comments on the disassembly evaluations inputted by recyclers, the producers can feed such information back to their product designs.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A method for supporting the treatment of products, performed by an information processing apparatus (2000), wherein the information processing apparatus (2000) performs
a treatment for specifying, on the basis of inputted data capable of identifying products and plural product data stored in a memory means (31), one of the products corresponding to the inputted data capable of identifying a product; and
a treatment for generating and outputting instruction data related to the treatment of the products or their constituent parts the disassembling method of which a primary and a secondary recyclers can independently and separately perform, by using such data as part structure data and part attribution data of the specified product, data of parts to be separated and subjected to a proper treatment, and data indicative of the parts to be shipped from the primary recycler to the secondary recycler and of the secondary recycler, all these data being stored in the storage device (31).

2. A method as claimed in Claim 1, wherein the information processing apparatus (2000) performs
a treatment for identifying one of the products corresponding to the inputted data capable of identifying products by searching the plural product data stored in the memory means (31) on the basis of inputted data capable of identifying products;
a treatment for obtaining the part structure data of the identified product on the basis of the data on the identified product and the plural product data stored in a memory means (31);
a treatment for obtaining the part attribution data of the identified product on the basis of the obtained part structure data and the plural product data stored in a memory means (31);
a treatment for judging whether there is a part to be separated and subjected to a proper treatment, among the constituent parts of the identified product, on the basis of the obtained part attribution data and the data, stored in the memory means (31), of part to be separated and subjected to a proper treatment;
a treatment for selecting a primary recycler capable of treating the identified product and a secondary recycler capable of treating the constituent parts of the identified product by referring to the data, stored in the memory means (31), of the products or the parts which the plural recyclers can treat, and the data representing the parts outputted as a result of the recyclers having treated the products or the parts and the external recyclers to which the outputted parts are shipped: and
a treatment for generating and outputting the instruction data on the treatment of the identified
product by the primary recycler and the instruction data on the treatment of the constituent parts of the identified product by the secondary recycler, by using the part structure data and the part attribution data of the identified product, the data of parts to be separated and subjected to a proper treatment, the data on the primary recycler capable of treating the identified product, and the data on the secondary recycler capable of treating the constituent parts of the identified product.

3. A method as claimed in Claim 2, wherein the data capable of identifying products includes data representing at least one of product model number, product type, model year, dimensions and weight.

4. A method as claimed in Claim 3, wherein the treatment for selecting the primary and secondary recyclers selects the secondary recycler depending on the distance from the secondary recycler to an external recycler to which a part is shipped out if there is plural external recyclers capable of treating the part to be shipped out.

5. A method as claimed in Claim 4, wherein the memory means (31) stores data on chemical substances regulated under the applicable law; and the treatment for generating the instruction data is to judge whether there is a part containing any chemical substance regulated under the applicable law, among the parts of the identified product or its constituent part, on the basis of the part attribution data and the data on chemical substances and to generate the instruction data by using the result of the judgment if there is such a part as containing any chemical substance regulated under the applicable law.

6. A method as claimed in Claim 5, wherein the memory means (31) stores the image data of the constituent parts of products; and the treatment for generating the instruction data is to use the image data, too, in generating the instruction data.

7. An information processing apparatus (2000, 25) connected with the terminals (2200, 2300) of plural recyclers via a network (2100), comprising
an interface (32) for receiving via the network (2100) the data capable of identifying products from the terminal of a primary recycler among the plural recyclers; and
a control means for identifying the product corresponding to the data capable of identifying products on the basis of the received data capable of identifying products and the plural product data stored in a memory means (31), and
for performing control in such a manner as to generate instruction data on the treatment of the identified product or its constituent parts and to output the instruction data to primary and secondary recyclers, respectively, by using the part structure data and the part attribution data of the identified product, data of parts to be separated and subjected to a proper treatment, data representing the part to be shipped from the primary recycler to the secondary recycler and the name of the secondary recycler, all the data being stored in the memory means (31).

8. A system for supporting the treatment of products, comprising the terminals (2200, 2300) of plural recyclers and an information processing apparatus (2000) connected via a network (2100) with the terminals (2200, 2300), wherein
the terminal (2200, 2300) includes a transmitting means for transmitting via the network (2100) such data capable of identifying products as product model number and product type to the information processing apparatus (2000) in response to the input from a primary recycler; and
the information processing apparatus (2000) includes
a receiving means for receiving via the network (2100) the data capable of identifying products from the terminal (2200, 2300), and
a control means (30) for identifying the product corresponding to the data capable of identifying products on the basis of the received data capable of identifying products and the plural product data stored in the memory means (31), and
for performing control in such a manner as to generate instruction data on the treatment of the identified product or its constituent parts and to output the instruction data to the primary and secondary recyclers, respectively, by using the part structure data and the part attribution data of the identified product, data of parts to be separated and subjected to a proper treatment, data representing the part to be shipped from a primary recycler to a secondary recycler and the name of the secondary recycler, all the data being stored in the memory means (31).

9. An apparatus as claimed in Claim 7 or a system as claimed in Claim 8, wherein the control means (30) incorporated in the information processing apparatus (2000) performs such control as identifying the product corresponding to the data capable of identifying products by searching the plural product data stored in the memory means (31) on the basis of the data capable of identifying products;
obtaining the part structure data of the identified product on the basis of the product data of the identified product and the part structure data of the plural products stored in the memory means (31);
obtaining the part attribution data of the identified product on the basis of the obtained part structure data and the plural part attribution data stored in the memory means (31);
judging whether there is a part to be separated and subjected to a proper treatment among the constituent parts of the identified product on the basis of the obtained part attribution data and the data of parts to be separated and subjected to a proper treatment stored in the memory means (31);
selecting a primary recycler capable of treating the identified product and a secondary recycler capable of treating the constituent parts of the identified product, by referring to the data of the products or the parts, stored in the memory means (31), which the recyclers can treat, and the data representing the parts outputted as a result of the recyclers having treated the products or the parts and the external recyclers to which the outputted parts are shipped; and
generating and outputting the instruction data for the primary recycler on the treatment of the identified product and the instruction data for the secondary recycler on the treatment of the constituent parts of the identified product, by using the part structure data and the part attribution data of the identified product, the data of parts to be separated and subjected to a proper treatment, the data on the primary recyclers capable of treating the identified product and the data on the secondary recyclers capable of treating the constituent parts of the identified product.

10. An apparatus or system as claimed in Claim 9, wherein the data capable of identifying products includes data representing at least one of product model number, product type, model year, dimensions and weight.

11. An apparatus or system as claimed in Claim 10, wherein the control means (30) selects the secondary recycler depending on the distance from the secondary recycler to an external recycler to which a part is shipped from the secondary recycler if there are plural external recyclers capable of treating the part to be shipped out.

12. An apparatus or system as claimed in Claim 11, wherein the memory means (31) stores data on chemical substances regulated under the applicable law; and
the control means (30) judges whether there is a part containing any chemical substance regulated under the applicable law, among the parts of the identified product or its constituent part, on the basis of the part attribution data and the data on chemical substances and
generates the instruction data by using the result of the judgment if there is such a part as containing any chemical substance regulated under the applicable law.

13. An apparatus or system as claimed in Claim 12, wherein the memory means (31) stores the image data of the constituent parts of products; and the control means generates the instruction data by using the image data, too.

14. A method as claimed in Claim 6 or an apparatus or system as claimed in Claim 13, wherein
the instruction data for the primary recycler include data representing the image of the identified product, its part structure, part disassembling order, parts to be separated and subjected to a proper treatment, parts containing chemical substances regulated under the applicable law, parts to be shipped to the secondary recycler, and the name of the secondary recycler for treating the shipped parts, and data having a field to contain a disassembly evaluation; and
the instruction data for the secondary recycler includes data representing the image of the identified product, its part structure, part disassembling order, parts to be separated and subjected to a proper treatment, parts containing chemical substances regulated under the applicable law and the field to contain a disassembly evaluation.

15. A method or an apparatus or system as claimed in Claim 14, wherein the memory means (31) stores therein the generated instruction data and the data on the disassembly evaluations inputted in the disassembly evaluation fields by the primary and secondary recyclers.
